Europäisches Patentamt

European Patent Office

Office européen des brevets

(19)

(11) Publication number: **0 185 510**

A2

(12) **EUROPEAN PATENT APPLICATION**

(21) Application number: 85309000.9

(22) Date of filing: 11.12.85

(51) Int. Cl.⁴: **B 01 J 23/90**
C 01 B 21/26

(30) Priority: 12.12.84 GB 8431364

(43) Date of publication of application:
25.06.86 Bulletin 86/26

(84) Designated Contracting States:
BE DE FR GB IT NL SE

(71) Applicant: JOHNSON MATTHEY PUBLIC LIMITED COMPANY
43 Hatton Garden
London, EC1N 8EE(GB)

(72) Inventor: Heywood, Alan Edward
41 Gladeside
St. Albans Herts. AL4 9JA(GB)

(72) Inventor: Shepherd, Ian David
35 Elizabeth Road
Henley-on-Thames Oxfordshire RG9 1RA(GB)

(74) Representative: Arthur, Bryan Edward et al,
Withers & Rogers 4 Dyer's Buildings Holborn
London EC1N 2JT(GB)

(54) Catchment packs.

(57) This invention relates to catchment packs of the type commonly utilized in platinum metal-catalysed ammonia oxidation plants for the manufacture of nitric acid.

In more detail there is disclosed a catchment pack suitable for locating downstreams of a platinum group metal catalyst in an ammonia oxidation reactor for the purpose of recovering volatilised platinum group metal or oxides thereof and comprising getter material in the form of an agglomeration or assemblage of unwoven randomly oriented fibres sandwiched between support gauzes made from an oxidation-resistant material, wherein the pack comprises a plurality of segments arranged in the same plane so as substantially to cover the cross-sectional area of the reactor, each segment containing said fibres sandwiched between said support gauzes in substantially stable regular distribution and having at least one essentially straight edge contiguous with an essentially straight edge on an adjacent segment.

Croydon Printing Company Ltd

- 1 -

CATCHMENT PACKS

This invention relates to catchment packs of the type commonly utilized in platinum metal-catalysed ammonia oxidation plants for the manufacture of nitric acid.

Ammonia oxidation is generally carried out by passing a mixture of ammonia and air at elevated temperature and either atmospheric or elevated pressure through an oxidation catalyst. Such catalysts frequently comprise one or more platinum group metals, for example an alloy of platinum/10% rhodium, which enables a high conversion efficiency to be realised at a high throughput of ammonia. However, under plant operating conditions, the platinum metals (particularly platinum itself) are themselves oxidised and these oxides, being relatively volatile, are carried away in the gas stream to be condensed and deposited on cooler parts of the plant downstream of the catalyst or lost altogether to atmosphere.

These losses of valuable platinum metals, if allowed to continue, would represent a significant increase in the costs of operating the process. It is therefore vital either that the losses be prevented or that the lost platinum metal be substantially recovered. Recovery is the generally accepted choice and to this end recovery or catchment packs have been devised for insertion in the gas stream substantially immediately downstream of the catalyst, and are formed from a material which has the known property of chemically trapping volatilised platinum metals by diffusion into the material. Materials typically used for this purpose comprise a major proportion of palladium, for example an alloy of palladium and gold, although other materials (generally including palladium) have been proposed.

It is the usual practice in the art for the chemically entrapping material (commonly referred to as a "getter" material to distinguish over materials such as are used for physical entrapment units, for example filter units) to be provided in the form of wire gauzes. A plurality of such gauzes is generally used, each gauze being separated from its neighbour by a supporting gauze formed from an oxidation-resistant stainless steel. However, getter materials have been proposed in other forms, in particular in the form of an agglomeration or assemblage of unwoven randomly oriented fibres, conveniently sandwiched between conventional gauzes, as disclosed in European patent application no. EP 63450. According to EP 63450, the fibres in the agglomeration may be welded, for example by laser techniques, in order to produce a self-supporting unit. Generally, however, it is stated that the fibres are bonded together in use by sintering.

During the service life of an ammonia oxidation reactor, it is necessary from time to time to change the catalyst unit and/or the catchment pack. Indeed, it is often considered expedient to change the catchment pack whenever the catalyst is changed and despite the fact that the catchment pack may well have many hours of potential service life left. This is because getter materials suffer embrittlement in use, and consequently any disturbance, such as inevitably occurs during plant maintenance, tends to cause physical breakdown of the getter material in the catchment packs. However, premature replacement naturally increases the processing costs. Providing a self-supporting unit by welding or by in situ sintering helps to resist the tendency of the embrittled getter material to fail during servicing, and therefore contributes to lowering the processing costs. However, welding produces a substantially rigid structure which is not suitable to be formed into a roll for transportation and storage,

- 4 -                                    0185510

as gauze catchment units generally are. Non-welded units, on the other hand, suffer the disadvantage that the fibre tends to settle during transportation and storage. This leads to unevenness in distribution of the fibre, particularly where the unit is stored or transported more or less upright or where it is rolled into a cylindrical form. Both these problems are rendered more acute where the catchment pack diameter is large, as is often the case with ammonia oxidation plants where reactor diameters in excess of 2 metres or even in excess of 3 metres are common.

We have now found that the problem of uneven distribution of the fibre in a non-welded pack, or excessive rigidity in a welded pack, may be reduced or avoided altogether by providing the catchment pack as a plurality of catchment pack segments located adjacent one another in the same plane so as together to constitute an effective catchment pack. In this way, the strength and rigidity of the gauzes which sandwich the fibre render each catchment pack segment less flexible relative to a unitary catchment pack; hence the parameters of the supporting gauzes may be related to the parameters of the fibre to provide sufficient rigidity and compression of the fibre for substantial redistribution on transportation and storage to be avoided while still maintaining adequate porosity. In the case of a welded pack, the individual catchment pack segments are sufficiently small relative to the overall diameter or girth of the complete catchment pack that rolling into a cylindrical form is rendered unnecessary.

According to the invention, we provide a catchment pack suitable for locating downstream of a platinum group metal catalyst in an ammonia oxidation reactor for the purpose of recovering volatilised platinum group metal or oxides thereof and comprising getter material in the form of an agglomeration or assemblage of unwoven randomly oriented fibres sandwiched between support gauzes made from an oxidation-resistant material, wherein the pack comprises a plurality of segments arranged in the same plane so as substantially to cover the cross-sectional area of the reactor, each segment containing said fibres sandwiched between said support gauzes in substantially stable regular distribution and having at least one essentially straight edge contiguous with an essentially straight edge on an adjacent segment.

By "platinum group metal" we particularly mean to include platinum and rhodium, although other platinum group metals may also be included as part of or in proximity to the catalyst and therefore require to be recovered.

Optionally, the individual segments which together constitute a catchment pack are hingeably connected together along contiguous essentially straight edges. In this way the whole pack is effectively rendered foldable for convenience in transportation and storage and may easily be unfolded on site - that is, at its

- 6 -                                  0185510

intended location in an ammonia oxidation reactor — to provide the complete catchment pack. Alternatively, segments may be temporarily secured together, for example with clips, in side-by-side relationship in their intended reactor location.

Catchment pack segments for use in catchment packs according to the invention may comprise a multilayered structure in which two or more layers each comprising an agglomeration or assemblage of unwoven randomly oriented fibres are separated from each other and sandwiched between support gauzes made from an oxidation-resistant material. For example a first agglomeration of fibres may be sandwiched between first and second layers each comprising at least one support gauze and a second agglomeration of fibres may be sandwiched between the said second layer and a third layer comprising at least one support gauze. Optionally a successive agglomeration or successive agglomerations of fibres may be sandwiched between the said third layer and a fourth or successive layer or layers each comprising at least one support gauze. The agglomerations may each contain the same or different proportions of the total weight of the fibres in that segment but in general it is preferred for the agglomeration located upstream — that is, adjacent to the catalyst — to contain the or a major proportion of the total weight of the fibres in that segment.

The getter material preferably comprises a major proportion of palladium, for example a palladium/20% gold alloy.

However, lowering the gold content improves the gettering activity although it increases the embrittlement problem. Nevertheles, the invention allows the use of such materials because individual pack segments are less flexible than prior art packs. Thus, even substantially pure palladium may be used with advantage as the getter material in catchment packs according to the invention. Alternatively alloys of the platinum group metals with other metals from Groups VII and VIII of the Periodic Table, the platinum group metal constituting at least 50% of the alloy composition, may be used as getter materials.

The fibres in catchment packs according to the invention are preferably relatively short filaments compared with the length of the wires in conventional getter gauzes and may be of generally circular or non-circular cross sectional shape. Examples of non-circular shape include rectangular (i.e. ribbon) and "D" or semi-circular cross section. The fibres may be made by melt spinning or melt extraction followed by cropping into suitable lengths, preferably between 1 cm and 10 cm in length, more preferably between 1 cm and 5 cm.

The support gauzes used in catchment packs according to the invention are made from an oxidation-resistant material such as a platinum group metal or platinum group metal-containing alloy or an oxidation-resistant stainless steel such as one from the Kanthal (RTM) range. The diameter of the wire from which the gauzes are woven, and the density of the weave, are chosen so as to provide the desired rigidity to the pack segments, having regard to the intrinsic flexibility of the fibre as determined by the parameters of the getter fibre, its compression density and whether or not it is welded.

In particular, we have unexpectedly found that although neither the support gauze segments nor the getter fibre alone have any substantial intrinsic resistance to in-plane deformation (bending and compression), the composite sandwich structure of the pack segments has considerable rigidity and resistance to in-plane deformation while at the same time being sufficiently porous to allow passage of gases therethrough without appreciable pressure drop. To this end, it is preferred for the fibres to be surface roughened and/or crimped so that the fibres interlock and hence increase the cohesiveness of the agglomerate. Melt-spun and melt extracted fibres are already to some extent surface roughened. We have thus found that it is not necessary to weld the fibres together, the distribution of fibres in each pack segment being sufficiently regular and stable that substantially no redistribution with resulting unevenness occurs during transportation or storage.

The pack segments may be made by sandwiching the agglomeration of fibres between upper and lower support gauzes in the shape of the segment with one gauze being oversize relative to the other gauze. The margins of the larger gauze are then turned over the edges of the smaller gauze and secured for example by stitching or stapling to provide in effect a gauze envelope enclosing the fibre agglomeration. The turned over edge contributes to the rigidity of the segment which may optionally be enhanced by reinforcing the edges (or at least those portions of the edges which in use are disposed substantially parallel to the direction of flow of the gas stream) with a porous or non-porous reinforcing material such as a strip of oxidation-resistant stainless steel. Alternatively, the segment may be made by securing together upper and lower gauze segments of substantially identical shape and size via a porous or non-porous edge strip. The stip and gauzes may be secured together, after enclosing the fibre agglomerate, by for example welding, stapling or stitching.

The fibre may be formed into an agglomerate merely by manual distribution and compression. However, it is preferred to form the fibre into a matted state by a process similar to the felting process used in the textile industry or by a process similar to the paper-making process, in which the fibres are allowed to settle from a liquid suspension while the liquid is withdrawn through a porous substrate. In the matted state, the fibres are subject to the optimum interlocking commensurate with the need to maintain porosity.

Although it has been proposed in connection with unitary fibre catchment packs to provide the pack with inbuilt catalyst gauzes at one end, according to the present invention we prefer to keep the catalyst gauzes and the catchment pack segments as separate items. This is because by the use of the invention the service life of the catchment pack may exceed that of the catalyst; hence the catchment pack will not automatically require to be replaced whenever the catalyst gauzes are replaced.

The invention also includes an ammonia oxidation plant, a method of oxidising ammonia to produce nitric acid, and a method of recovering volatilised platinum metals, using catchment packs according to the main aspect of the invention.

## CLAIMS

1.  A catchment pack suitable for locating downstream of a platinum group metal catalyst in an ammonia oxidation reactor for the purpose of recovering volatilised platinum group metal or oxides thereof and comprising getter material in the form of an agglomeration or assemblage of unwoven randomly oriented fibres sandwiched between support gauzes made from an oxidation-resistant material, wherein the pack comprises a plurality of segments arranged in the same plane so as substantially to cover the cross-sectional area of the reactor, each segment containing said fibres sandwiched between said support gauzes in substantially stable regular distribution and having at least one essentially straight edge contiguous with an essentially straight edge on an adjacent segment.

2.  A catchment pack according to claim 1 in which the individual segments are hingeably connected together along contiguous essentially straight edges.

3.  A catchment pack according to claim 1 or claim 2 in which the segments thereof comprise a multilayered structure.

4.  A catchment pack according to any preceding claim in which the getter material comprises a palladium/gold alloy containing a major proportion of palladium.

5.  A catchment pack according to any of claims 1 to 3 in which the getter material comprises substantially pure palladium.

6.  A catchment pack according to any of claims 1 to 3 in which the getter material comprises of platinum group metal alloyed with another metal from Groups VII and VIII of the Periodic Table.

7.  A catchment pack according to any preceding claim in which the fibres are interlocked.

8.  A catchment pack according to claim 7 in which the fibres are in a matted state.

9.  A catchment pack according to any preceding claim, in which the segments thereof comprise a gauze envelope enclosing an agglomeration of fibres.

10.  A catchment pack according to any of claims 1 to 8, in which the segments comprise upper and lower gauze segments secured together via an edge strip and

- 13 -                                    0185510

enclosing fibre agglomerate.


1.      An ammonia oxidation plant including a catchment pack as
        claimed in any of claims 1 to 10.


2.      A method of oxidising ammonia to produce nitric acid, in
        which the ammonia and air are passed at elevated
        temperature through a platinum metal oxidation catalyst
        and substantially immediately thereafter through a
        catchment pack as claimed in any of claims 1 to 10.


3.      A method of recovering volatilised platinum metals or
        oxides thereof lost from the catalyst of an ammonia
        oxidation plant comprising inserting into the gas stream
        substantially immediately downstream of the catalyst a
        catchment pack according to any of claims 1 to 10.